# EUROPÄISCHE PATENTANMELDUNG

(11) **EP 4 589 247 A1**
(43) Veröffentlichungstag der Anmeldung: **23.07.2025**
(21) Anmeldenummer: 25151574.8
(22) Anmeldetag: 13.01.2025
(51) Int. Cl.: G01B 11/25, G01B 21/04

(54) **KORREKTURVORRICHTUNG**

(30) Priorität: 22.01.2024 DE 102024101786
(71) Anmelder: senswork GmbH, 84489 Burghausen (DE)
(72) Erfinder: König, Andreas, 82293 Mittelstetten (DE); Rieger, Roman, 83317 Teisendorf (DE); Obergrußberger, Rainer, 84568 Pleiskirchen (DE)
(74) Vertreter: Lichtnecker, Markus Christoph

(57) **Zusammenfassung**

Die Erfindung betrifft eine Korrekturvorrichtung für eine bewegliche Datenerfassungsvorrichtung zur Erfassung von Geometriedaten eines Objekts, aufweisend wenigstens eine Referenzgeometrie zur zumindest teilweisen Anordnung innerhalb eines Erfassungsbereichs der Datenerfassungsvorrichtung, und eine Auswertevorrichtung zum Korrigieren der Geometriedaten anhand von durch die Datenerfassungsvorrichtung erfassten Referenzgeometriedaten der Referenzgeometrie.

## Beschreibung

Die Erfindung betrifft eine Korrekturvorrichtung für eine bewegliche Datenerfassungsvorrichtung zur Erfassung von Geometriedaten eines Objekts.

Sich bewegende Datenerfassungsvorrichtung können beispielsweise einen Scanner aufweisen, der an einem Roboterarm montiert ist.

Bisherige Korrekturvorrichtungen dienen dazu, den Scanner einmalig zu kalibrieren.

Bewegt sich die Datenerfassungsvorrichtung, so können jedoch permanent Stördaten auftreten, beispielsweise aufgrund von Vibrationen des Roboterarms und/oder durch so genannte Stick-Slip-Effekte.

Derartige Stördaten werden von bisherigen Korrekturvorrichtung nicht korrigiert.

Es ist daher eine Aufgabe der Erfindung, eine Korrekturvorrichtung, eine Datenerfassungsvorrichtung, ein System sowie ein Verfahren zu schaffen, bei der/dem durch eine Bewegung der Datenerfassungsvorrichtung bedingte Stördaten korrigiert werden.

Die Lösung dieser Aufgabe erfolgt durch die Gegenstände sowie das Verfahren der unabhängigen Ansprüche.

Erfindungsgemäß ist die Korrekturvorrichtung für eine bewegliche bzw. sich bewegende Datenerfassungsvorrichtung zur Erfassung von Geometriedaten eines Objekts, z.B. eines Prüflings, vorgesehen bzw. ist hierfür ausgebildet und/oder kann hierfür verwendet werden.

Die Datenerfassungsvorrichtung kann sich beispielsweise bewegen, um wenigstens ein großes Objekt zu erfassen und/oder zumindest ein Objekt von unterschiedlichen Seiten zu erfassen.

Es können beispielsweise auch mehrere Objekte erfasst werden.

Vorzugsweise können die Daten akustisch, z.B. mittels Ultraschalls, und/oder optisch, z.B. mittels Lichtwellen, erfasst werden. Hierbei kann zum Beispiel wenigstens ein Ultraschallsensor, Laser-, Scanner-, Lidar- und/oder Kamera-System eingesetzt werden.

Die Datenerfassung kann z.B. im sichtbaren und/oder im unsichtbaren Bereich erfolgen.

Vorzugsweise kann die 3D-Struktur eines Objekts erfasst werden.

Die Korrekturvorrichtung weist wenigstens eine Referenzgeometrie zur zumindest teilweisen Anordnung innerhalb eines Erfassungsbereichs der Datenerfassungsvorrichtung auf.

Die Referenzgeometrie ist zumindest teilweise oder vollständig im Erfassungsbereich, z.B. dem Blickfeld, der Datenerfassungsvorrichtung angeordnet. Wenigstens ein Teil der Referenzgeometrie wird somit stets - bevorzugt zusammen mit dem Objekt - erfasst, also mit aufgenommen.

Die Form der Referenzgeometrie ist vorzugsweise beliebig.

Beispielsweise kann die Referenzgeometrie als Referenzschiene ausgebildet sein.

Das Material der Referenzgeometrie ist vorzugsweise beliebig. Beispielsweise kann die Referenzgeometrie ein Kunststoff-, Metall-, Holz- und/oder Steinmaterial, z.B. Granit, umfassen oder daraus bestehen.

Die Referenzgeometrie kann beispielsweise neben dem Objekt bzw. einer Objektaufnahme, auf der sich das Objekt befindet, platziert werden. Beispielseise kann die Referenzgeometrie neben das Objekt platziert und/oder neben dem Objekt fixiert werden. Beispielsweise kann die Referenzgeometrie mit der Objektaufnahme fest verbunden sein.

Die Korrekturvorrichtung weist eine Auswertevorrichtung zum Korrigieren der Geometriedaten anhand von durch die Datenerfassungsvorrichtung erfassten Referenzgeometriedaten der Referenzgeometrie auf.

Die Auswertevorrichtung kann beispielsweise eine Recheneinheit, z.B. einen Computer, umfassen oder daraus bestehen.

Die Datenerfassungsvorrichtung erfasst im Betrieb, vorzugsweise permanent, sowohl die Geometriedaten des Objekts als auch die Referenzgeometriedaten der Referenzgeometrie.

Die Auswertevorrichtung kann vorzugsweise die Geometriedaten sowie die Referenzgeometriedaten auswerten. Da die Form der Referenzgeometrie bekannt ist, können durch die Bewegung der Datenerfassungsvorrichtung bedingte Stördaten und/oder Offsets ermittelt, egalisiert und/oder herausgerechnet werden und die Geometriedaten entsprechend korrigiert werden.

Diese Korrektur erfolgt vorzugsweise während der Datenerfassung, zeitversetzt und/oder nachgeschaltet. Die erfassten Geometriedaten werden bevorzugt stets korrigiert.

Weiterbildungen der Erfindung sind auch den abhängigen Ansprüchen, der Beschreibung sowie den beigefügten Zeichnungen zu entnehmen.

Gemäß einer Ausführungsform ist die Referenzgeometrie an einem Randbereich des Erfassungsbereichs angeordnet.

Die Erfassung der Geometriedaten des Objekts wird somit nicht durch die Referenzgeometrie beeinträchtigt.

Nach einer weiteren Ausführungsform ist die Referenzgeometrie an die Form des Objekts angepasst.

Vorzugsweise ist die Referenzgeometrie der Grundform des Objekts nachempfunden.

So kann z.B. bei einem gebogenen Objekt auch die Referenzgeometrie gebogen sein.

Je besser die Form der Referenzgeometrie der Form des Objekts entspricht, desto genauer ist beispielswiese die Korrektur.

Gemäß einer weiteren Ausführungsform ist die Referenzgeometrie linear oder gebogen.

Beispielsweise ist eine kreisförmige Referenzgeometrie denkbar.

Nach einer weiteren Ausführungsform sind wenigstens oder genau zwei Referenzgeometrien vorgesehen.

Vorzugsweise können die Referenzgeometrien an gegenüberliegenden Seiten des Objekts angeordnet sein, z.B. oben und unten oder links und rechts.

Die Referenzgeometrien können zum Beispiel baugleich ausgebildet sein. Alternativ kann sich z.B. die Form der Referenzgeometrien unterscheiden. Dies ist beispielsweise dann vorteilhalft, wenn die Form des Objekts an verschiedenen Seiten unterschiedlich ist.

Die Erfindung betrifft eine Datenerfassungsvorrichtung zur Erfassung von Geometriedaten eines Objekts und Referenzgeometriedaten einer Referenzgeometrie mit einer erfindungsgemäßen Korrekturvorrichtung.

Gemäß einer Ausführungsform weist die Datenerfassungsvorrichtung einen Scanner auf.

Bei dem Scanner kann es sich vorzugsweise um einen Lasertriangulationsscanner handeln. Auch andere, z.B. akustische und/oder optische, Erfassungsvorrichtungen sind grundsätzlich denkbar.

Die Datenerfassungsvorrichtung kann eine Auswertevorrichtung aufweisen, d.h. die Auswertevorrichtung kann einen Bestandteil der Datenerfassungsvorrichtung bilden.

Die Auswertevorrichtung kann beispielsweise in den Scanner integriert sein.

Nach einer weiteren Ausführungsform weist die Datenerfassungsvorrichtung eine Antriebsvorrichtung, vorzugsweise einen Roboter, auf.

Beispielsweise kann der Scanner an einem Roboterarm montiert sein. Dies ermöglicht einen äußerst flexiblen Einsatz.

Grundsätzlich sind ebenso andere Antriebsvorrichtungen, z.B. Hebebühnen, Schienensysteme und/oder Kräne, denkbar.

Die Erfindung betrifft ein System mit einer erfindungsgemäßen Datenerfassungsvorrichtung und einem Objekt.

Das Objekt kann einen Bestandteil des Systems bilden.

Es können auch mehrere Objekte, z.B. zwei, drei, vier, fünf oder mehr, vorgesehen sein.

Schließlich betrifft die Erfindung ein Verfahren zum Korrigieren von durch eine bewegliche Datenerfassungsvorrichtung erfassten Geometriedaten eines Objekts mit einer erfindungsgemäßen Korrekturvorrichtung, einer erfindungsgemäßen Datenerfassungsvorrichtung und/oder einem erfindungsgemäßen System.

Dabei erfasst die Datenerfassungsvorrichtung Referenzgeometriedaten wenigstens einer Referenzgeometrie.

Die Auswertevorrichtung korrigiert die Geometriedaten anhand der Referenzgeometriedaten.

Da die zu erwartenden Oberflächendaten der Referenzgeometrien vorab bekannt sind bzw. vorab - gegebenenfalls mehrfach - erfasst werden, können damit die Störfrequenzen und/oder Offsets auf dem Datenanteil des Objekts entfernt werden.

Vorzugsweise werden im Betrieb die Referenzgeometriedaten permanent zusammen mit den Geometriedaten erfasst und nicht lediglich einmalig zum Kalibieren.

Alle hier beschriebenen Ausführungsformen und Bauteile der Vorrichtungen sind vorzugsweise dazu ausgebildet, z.B. mittels einer Steuerungsvorrichtung, nach dem hier beschriebenen Verfahren betrieben zu werden. Ferner können alle hier beschriebenen Ausführungsformen der Vorrichtungen sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Korrekturvorrichtung, und
- Fig. 2: einen Profilschnitt einer erfassten Oberflächenkontur.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Vorzugsweise kann die Anzahl an Referenzgeometrien bzw. Objekten und/oder deren Form bzw. Größe variieren. Ferner kann anstelle eines Roboters eine alternative Antriebsvorrichtung vorgesehen sein.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

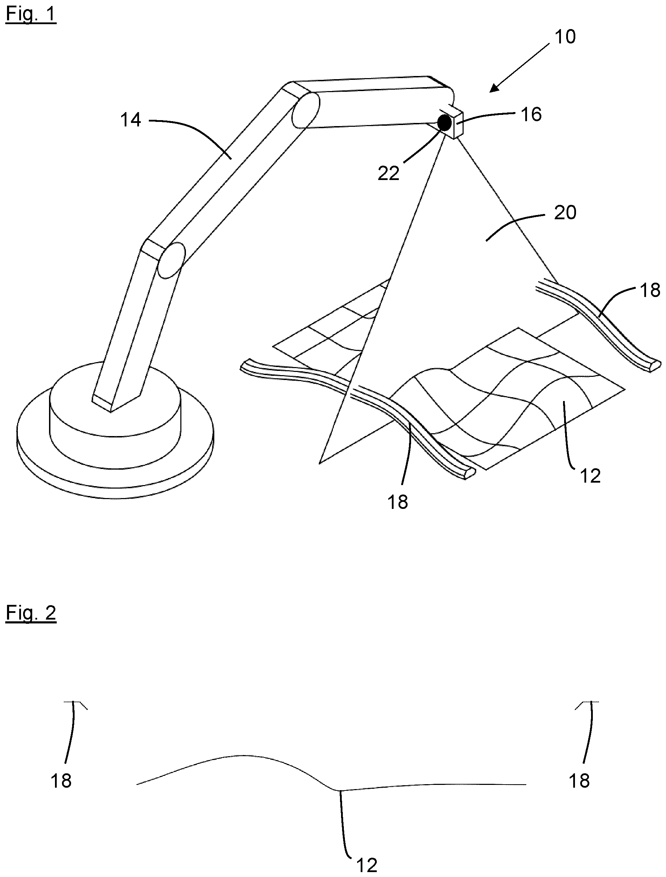

Fig. 1 zeigt eine Korrekturvorrichtung für eine bewegliche Datenerfassungsvorrichtung 10 zur Erfassung von Geometriedaten eines Objekts 12.

Die Datenerfassungsvorrichtung 10 weist eine als Roboter ausgebildete Antriebsvorrichtung 14 und einen am Roboter 14 befestigten Scanner 16, z.B. Lasertriangulationsscanner, auf.

Die Korrekturvorrichtung weist zwei Referenzgeometrien 18 auf, die innerhalb eines Erfassungsbereichs 20 der Datenerfassungsvorrichtung 10 angeordnet sind.

Die Referenzgeometrien 18 sind an gegenüberliegenden Seiten des Objekts 12 angeordnet und weisen jeweils eine Ausformung im Raum auf.

Ferner weist die Korrekturvorrichtung eine Auswertevorrichtung 22 zum Korrigieren der Geometriedaten auf. Die Geometriedaten werden anhand von Referenzgeometriedaten der Referenzgeometrien 18 korrigiert, welche durch die Datenerfassungsvorrichtung 10 erfasst werden.

In Fig. 2 ist ein Profilschnitt einer erfassten Oberflächenkontur des Objekts 12 dargestellt, mit den beiden Referenzgeometrien 18 auf der linken und rechten Seite.

### Bezugszeichenliste

- 10: Datenerfassungsvorrichtung
- 12: Objekt
- 14: Roboter, Antriebsvorrichtung
- 16: Scanner
- 18: Referenzgeometrien
- 20: Erfassungsbereich
- 22: Auswertevorrichtung

## Patentansprüche

1. Korrekturvorrichtung für eine bewegliche Datenerfassungsvorrichtung (10) zur Erfassung von Geometriedaten eines Objekts (12), aufweisend wenigstens eine Referenzgeometrie (18) zur zumindest teilweisen Anordnung innerhalb eines Erfassungsbereichs (20) der Datenerfassungsvorrichtung (10), und
eine Auswertevorrichtung (22) zum Korrigieren der Geometriedaten anhand von durch die Datenerfassungsvorrichtung (10) erfassten Referenzgeometriedaten der Referenzgeometrie (18).

2. Korrekturvorrichtung nach Anspruch 1,
**dadurch gekennzeichnet,**
**dass** die Referenzgeometrie (18) an einem Randbereich des Erfassungsbereichs (20) angeordnet ist.

3. Korrekturvorrichtung nach Anspruch 1 oder 2,
**dadurch gekennzeichnet,**
**dass** die Referenzgeometrie (18) an die Form des Objekts (12) angepasst ist.

4. Korrekturvorrichtung nach einem der vorhergehenden Ansprüche,
**dadurch gekennzeichnet,**
**dass** die Referenzgeometrie (18) linear oder gebogen ist.

5. Korrekturvorrichtung nach einem der vorhergehenden Ansprüche,
**dadurch gekennzeichnet,**
**dass** wenigstens oder genau zwei Referenzgeometrien (18) vorgesehen sind, vorzugsweise an gegenüberliegenden Seiten des Objekts (12).

6. Datenerfassungsvorrichtung zur Erfassung von Geometriedaten eines Objekts (12) und Referenzgeometriedaten einer Referenzgeometrie (18) mit einer Korrekturvorrichtung nach einem der vorhergehenden Ansprüche.

7. Datenerfassungsvorrichtung nach Anspruch 6,
**dadurch gekennzeichnet,**
**dass** die Datenerfassungsvorrichtung (10) einen Scanner (16), vorzugsweise Lasertriangulationsscanner, aufweist.

8. Datenerfassungsvorrichtung nach Anspruch 6 oder 7,
**dadurch gekennzeichnet,**
**dass** die Datenerfassungsvorrichtung (10) eine Antriebsvorrichtung (14), vorzugsweise einen Roboter, aufweist.

9. System mit einer Datenerfassungsvorrichtung (10) nach einem der Ansprüche 6 bis 8 und einem Objekt (12).

10. Verfahren zum Korrigieren von durch eine bewegliche Datenerfassungsvorrichtung (10) erfassten Geometriedaten eines Objekts (12) mit einer Korrekturvorrichtung nach einem der Ansprüche 1 bis 5, einer Datenerfassungsvorrichtung (10) nach einem der Ansprüche 6 bis 8 und/oder einem System nach Anspruch 9, bei dem
die Datenerfassungsvorrichtung (10) Referenzgeometriedaten wenigstens einer Referenzgeometrie (18) erfasst und
die Auswertevorrichtung (22) die Geometriedaten anhand der Referenzgeometriedaten korrigiert.
